# EUROPÄISCHE PATENTSCHRIFT

(11) **EP 2 421 905 B1**
(45) Veröffentlichungstag und Bekanntmachung des Hinweises auf die Patenterteilung: **13.03.2013**
(21) Anmeldenummer: 10713980.0
(22) Anmeldetag: 19.04.2010
(51) Int. Cl.: C08F 290/06, C08G 18/42, C08G 18/67, C09D 4/06, C09D 175/16

(54) **STRAHLUNGSHÄRTBARE BESCHICHTUNGSMASSEN**
RADIATION-CURABLE COATING MASSES
MATERIAUX DE REVETEMENT DURCISSABLES PAR RAYONNEMENT

(30) Priorität: 22.04.2009 EP 09158433
(43) Veröffentlichungstag der Anmeldung: 29.02.2012
(73) Patentinhaber: BASF SE, 67056 Ludwigshafen (DE)
(72) Erfinder: SCHWALM, Reinhold, 67157 Wachenheim (DE); NITSCHKE, Christian, 67346 Speyer (DE); ENENKEL, Peter, 67258 Heßheim (DE); BECK, Erich, 68526 Ladenburg (DE)
(86) Internationale Anmeldenummer: PCT/EP2010/055088
(87) Internationale Veröffentlichungsnummer: WO 2010/121978

(56) Entgegenhaltungen:
- EP-A2- 1 323 758
- WO-A1-2004/067599
- WO-A1-2005/035460
- WO-A1-2008/155352

## Beschreibung

Die vorliegende Erfindung betrifft neue strahlungshärtbare Beschichtungsmassen die Beschichtungen mit hoher Flexibilität und verbesserter Reißfestigkeit ergeben.

Strahlungshärtbare Zusammensetzungen haben in der Technik eine breite Anwendung, insbesondere als hochwertige Beschichtungsmaterialien für Oberflächen erlangt. Unter strahlungshärtbaren Zusammensetzungen versteht man Zubereitungen, die ethylenisch ungesättigte Polymere oder Prepolymere enthalten, und die, gegebenenfalls nach einem physikalischen Trocknungsschritt, durch Einwirkung energiereicher Strahlung, beispielsweise durch Bestrahlung mit UV-Licht oder durch Bestrahlung mit energiereichen Elektronen (Elektronenstrahlung), ausgehärtet werden.

Die US 4,153,778 beschreibt Urethanacrylatoligomere, die ein Polytetramethylenoxiddiol einpolymerisiert enthalten und deren Verwendung als Beschichtungen, Bindemittel und Klebstoffe, die weitere Komponenten, wie z. B. ethylenisch ungesättigte Monomere, enthalten können.

Die JP-A-01216837 beschreibt Filmbeschichtungen mit guter Kratzfestigkeit, Stoßfestigkeit und Abriebbeständigkeit, zu deren Herstellung ein Urethanacrylatoligomer auf Basis eines Diols mit einem zahlenmittleren Molekulargewicht von 200 bis 4000 eingesetzt wird.

Die US 4,129,667 beschreibt strahlungshärtbare Beschichtungsmittel, umfassend ein Urethanacrylatoligomer und einen UV-Absorber. Die eingesetzten Urethanacrylate können dabei von Polytetrahydrofuran abgeleitete Wiederholungseinheiten aufweisen. Zusätzlich können die Beschichtungsmittel noch mit dem Urethanacrylat copolymerisierbare Monomere, wie Monoester, Diester und höhere Ester der Acrylsäure und Methacrylsäure aufweisen.

Die US 4,135,007 hat einen der US 4,129,667 vergleichbaren Offenbarungsgehalt.

JP 04-296315 A und JP 04-091116 A beschreiben Urethan(meth)acrylate, enthaltend Polyester aus Addukten eines Diols mit Caprolacton oder beta-Methyl-delta-Valerolacton mit einer dibasischen Säure.

JP 61-108622 A beschreibt Urethan(meth)acrylate, enthaltend hochmolekulare Polyester mit einem Molgewicht von 5000 g/mol.

JP 05-009247 A beschreibt beschreiben Urethan(meth)acrylate, enthaltend Polyester aus Addukten von Triolen bzw. Tetrolen mit Caprolacton

J. Weikard, W. Fischer, E. Lühmann und d. Rappen beschreiben in RadTech e | 5, 2004 Technical Proceedings den Einfluß von verschiedenen polymeren Diolen auf die Elastizität von Urethanacrylaten, nämlich reine Polyether, Polyester mit kurzen Ethersegmenten, Polyester, Polyesterpolycarbonate und Polycarbonate. Die Natur dieser einzelnen Bausteine wird nicht offenbart.

WO 2005/035460 A1 beschreibt Gemische aus difunktionellen aliphatischen Urethan(meth)acrylaten auf Basis von Poly-THF und einen Heterocyclus tragenden Reaktiwerdünnern.

Die dort beschriebenen Systeme zeigen zwar bereits gute Oberflächeneigenschaften, jedoch wären höhere Härte und Flexibilität der erhaltenen Bechichtungen wünschenswert.

WO 2008/155352 A beschreibt strahlungshärtbare Beschichtungsmassen mit hoher Flexibilität. Die mit diesen erhaltenen Beschichtungen zeigen gute Eigenschaften, jedoch wird eine höhere Reißfestigkeit gefordert.

Aufgabe der vorliegenden Erfindung war es, strahlungshärtbare Beschichtungsmassen zu entwickeln, die eine gute Härte bei gleichzeitig hoher Flexibilität und erhöhter Reißfestigkeit aufweisen.

Die Aufgabe wurde gelöst durch strahlungshärtbare Beschichtungsmassen, enthaltend wenigstens ein Urethan(meth)acrylat (A) der Molmasse Mₙ von 1000 bis 5000 g/mol mit zwei ethylenisch ungesättigten Doppelbindungen pro Molekül, das als Aufbaukomponenten enthält
(a1) mindestens ein Diisocyanat,
(a2) mindestens ein Polyesterdiol, aufgebaut aus
   (a21) optional einem Diol mit einem Molgewicht unter 250 g/mol,
   (a22) mindestens einem oligomeren oder polymeren Diol, ausgewählt aus der Gruppe bestehend aus
      (a221) Polytetrahydrofurandiol der Molmasse Mn bis zu 1000 g/mol und
      (a222) mindestens einem Polycaprolactondiol der Molmasse Mn bis zu 600 g/mol
   (a23) mindestens einer Dicarbonsäure, ausgewählt aus der Gruppe bestehend aus Verbindungen der Formel (la) 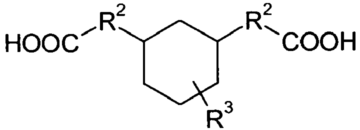 und/oder Verbindungen der Formel (Ib) 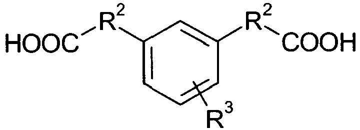
(a3) mit genau einer gegenüber Isocyanat reaktiven Gruppe und genau einer radikalisch polymerisierbaren Gruppe
   und
   wenigstens einen monoethylenisch ungesättigten Reaktiwerdünner B, der wenigstens eine cycloaliphatische oder heterocyclische Gruppe aufweist.

Diese erfindungsgemäßen Beschichtungsmassen zeigen eine gegenüber den aus der WO 2005/035460 A1 bzw. WO 2008/155352 A bekannten vergleichbaren Systemen eine verbesserte Härte und Flexibilität, die sich besonders in einer erhöhten Reißdehnung widerspiegelt.

Die erfindungsgemäßen Beschichtungsmassen enthälten mindestens ein, beispielsweise 1 bis 3, bevorzugt 1 bis 2 und besonders bevorzugt genau ein Urethan(meth)-acrylat (A).

Radikalisch polymerisierbare Gruppen im Sinne dieses Textes sind dabei Vinylether, Acrylat- und Methacrylatgruppen, bevorzugt Acrylat- und Methacrylatgruppen und besonders bevorzugt Acrylatgruppen.

Bei der Komponente (a1) handelt es sich um mindestens ein, beispielsweise ein bis drei, bevorzugt ein bis zwei und besonders bevorzugt genau ein Diisocyanat.

Das Diisocyanat (a1) kann (cyclo)aliphatisch oder aromatisch, bevorzugt (cyclo)aliphatisch sein.

Mit dem Begriff "(cyclo)aliphatische Diisocyanate" sind dabei aliphatische und cycloaliphatische Diisocyanate zusammengefaßt.

Cycloaliphatische Isocyanate sind solche, die mindestens ein cycloaliphatisches Ringsystem enthalten.

Aliphatische Isocyanate sind solche, die ausschließlich gerade oder verzweigte Ketten enthalten, also acyclischen Verbindungen.

Aromatische Isocyanate sind solche, die mindestens ein aromatisches Ringsystem enthalten.

Die mittlere NCO Funktionalität solcher Verbindung beträgt in der Regel um 2, beispielsweise von 1,8 bis 2,2, bevorzugt von 1,9 bis 2,1 und besonders bevorzugt 1,95 bis 2,05. Von 2,0 abweichende Werte können sich beispielsweise durch Oligomerenbildung der Diisocyanate oder Verlust von NCO-Gruppen beispielsweise infolge Luftfeuchtigkeit ergeben.

Der Gehalt an Isocyanatgruppen, berechnet als NCO = 42 g/mol, beträgt in der Regel von 5 bis 25 Gew%.

Bei den Diisocyanaten handelt es sich bevorzugt um Isocyanate mit 4 bis 20 C-Atomen.

Aromatische Diisocyanate sind beispielsweise aromatische Diisocyanate wie 2,4- oder 2,6-Toluylendiisocyanat und deren Isomerengemische, m- oder p-Xylylendiisocyanat, 2,4'- oder 4,4'-Diisocyanatodiphenylmethan und deren Isomerengemische, 1,3- oder 1,4-Phenylendiisocyanat, 1-Chlor-2,4-phenylendiisocyanat, 1,5-Naphthylendiisocyanat, Diphenylen-4,4'-diisocyanat, 4,4'-Diisocyanato-3,3'-dimethyldiphenyl, 3-Methyldiphenylmethan-4,4'-diisocyanat, Tetramethylxylylendiisocyanat, 1,4-Diisocyanatobenzol oder Diphenylether-4,4'-diisocyanat.

Beispiele für übliche Diisocyanate sind aliphatische Diisocyanate wie Tetramethylendiisocyanat, 1,5-Pentamethylendiisocyanat, Hexamethylendiisocyanat (1,6-Diisocyanatohexan), Octamethylendiisocyanat, Decamethylendiisocyanat, Dodecamethylendiisocyanat, Tetradecamethylendiisocyanat, Derivate des Lysindiisocyanates, Trimethylhexandiisocyanat oder Tetramethylhexandiisocyanat, und cycloaliphatische Diisocyanate wie 1,4-, 1,3- oder 1,2-Diisocyanatocyclohexan, 4,4'- oder 2,4'-Di-(isocyanatocyclohexyl)methan, 1-isocyanato-3,3,5- trimethyl-5-(isocyanatomethyl)cyclohexan (Isophorondiisocyanat), 1,3-oder 1,4-Bis(isocyanatomethyl)cyclohexan oder 2,4-, oder 2,6-Diisocyanato-1-methylcyclohexan sowie 3 (bzw. 4), 8 (bzw. 9)-Bis(isocyanatomethyl)-tricyclo[5.2.1.0^{2.6}]decan-Isomerengemische.

Besonders bevorzugt sind Hexamethylendiisocyanat, 1,3-Bis(isocyanatomethyl)cyclohexan, Isophorondiisocyanat und 4,4'- oder 2,4'-Di(isocyanatocyclohexyl)methan, ganz besonders bevorzugt sind Isophorondiisocyanat und 4,4'- oder 2,4'-Di(isocyanatocyclohexyl)methan, insbesondere bevorzugt ist Isophorondiisocyanat.

Isophorondiisocyanat liegt zumeist als ein Gemisch, und zwar der cis- und trans-Isomere vor, in der Regel im Verhältnis von ca. 60:40 bis 80:20 (w/w), bevorzugt im Verhältnis von ca. 70:30 bis 75:25 und besonders bevorzugt im Verhältnis von ca. 75:25. Dicyclohexylmethan-4,4'-diisocyanat kann ebenfalls als Gemisch der verschiedenen cis- und trans-Isomere vorliegen.

Für die vorliegende Erfindung können sowohl solche Isocyanate eingesetzt werden, die durch Phosgenierung der korrespondierenden Amine erhalten werden, als auch solche, die ohne die Verwendung von Phosgen, d. h. nach phosgenfreien Verfahren, hergestellt werden. Nach Angaben der EP-A-0 126 299 (USP 4 596 678), EP-A-126 300 (USP 4 596 679) und EP-A-355 443 (USP 5 087 739) beispielsweise können (cyclo)-aliphatische Diisocyanate, z.B. wie 1 ,6-Hexamethylendiisocyanat (HDI), isomere aliphatische Diisocyanate mit 6 Kohlenstoffatomen im Alkylenrest, 4,4'- oder 2,4'-Di-(isocyanatocyclohexyl)methan und 1-Isocyanato-3-isocyanato-methyl-3,5,5-trimethylcyclohexan (Isophorondiisocyanat bzw. IPDI) hergestellt werden durch Umsetzung der (cyclo)aliphatischen Diamine mit beispielsweise Harnstoff und Alkoholen zu (cyclo)-aliphatischen Biscarbaminsäureestern und deren thermische Spaltung in die entsprechenden Diisocyanate und Alkohole. Die Synthese erfolgt meist kontinuierlich in einem Kreislaufverfahren und gegebenenfalls in Gegenwart von N-unsubstituierten Carbaminsäureestern, Dialkylcarbonaten und anderen aus dem Reaktionsprozeß zurückgeführten Nebenprodukten. So erhaltene Di- oder Polyisocyanate weisen in der Regel einen sehr geringen oder sogar nicht meßbaren Anteil an chlorierten Verbindungen auf, was zu günstigen Farbzahlen der Produkte führt.

In einer Ausführungsform der vorliegenden Erfindung weisen die Diisocyanate (a1) einen Gesamtgehalt an hydrolysierbarem Chlor von weniger als 200 ppm auf, bevorzugt von weniger als 120 ppm, besonders bevorzugt weniger als 80 ppm, ganz besonders bevorzugt weniger als 50 ppm, insbesondere weniger als 15 ppm und speziell weniger als 10 ppm. Dies kann beispielsweise gemessen werden durch die ASTM-Vorschrift D4663-98. Es können aber selbstverständlich auch Diisocyanate (a1) mit einem höheren Chlorgehalt eingesetzt werden.

Bei der Komponente (a2) handelt es sich um mindestens einen Polyester der Molmasse Mₙ von 1000 bis 4000 g/mol, aufgebaut aus den oben aufgeführten Komponenten (a21), (a22) und (a23).

Bei der optionalen Komponente (a21) handelt es sich um ein Diol mit einem Molgewicht unter 250 g/mol.

Beispiele dafür sind Ethylenglykol, 1,2-Propandiol, 1,3-Propandiol, 1,1-Dimethylethan-1,2-diol, 2-Butyl-2-ethyl-1,3-Propandiol, 2-Ethyl-1,3-Propandiol, 2-Methyl-1,3-Propandiol, Neopentylglykol, Hydroxypivalinsäureneopentylglykolester, 1,2-, 1,3- oder 1,4-Butandiol, 1,6-Hexandiol, 1,10-Dekandiol, Bis-(4-hydroxycyclohexan)isopropyliden, Tetramethylcyclobutandiol, 1,2-, 1,3- oder 1,4-Cyclohexandiol, Cyclooctandiol, Norbornandiol, Pinandiol, Decalindiol, 2-Ethyl-1,3-Hexandiol, 2,4-Diethyl-oktan-1,3-diol, Hydrochinon, Bisphenol A, Bisphenol F, Bisphenol B, Bisphenol S, 2,2-Bis(4-hydroxycyclohexyl)propan, 1,1-, 1,2-, 1,3- und 1,4-Cyclohexandimethanol, 1,2-, 1,3- oder 1,4-Cyclohexandiol.

Die Komponente (a21) nimmt bevorzugt 0 bis 15 mol% der OH-funktionellen Bausteine ein, bevorzugt 0 bis 10 mol%, besonders bevorzugt 0 mol%.

Bevorzugt ist keine Komponente (a21) anwesend.

Bei dem mindestens einem oligomeren oder polymeren Diol (a22) handelt es sich um mindestens ein Polytetrahydrofurandiol (a221) der Molmasse Mn bis zu 1000 g/mol und/oder mindestens ein Polycaprolactondiol (a222) der Molmasse Mn bis zu 600 g/mol, bevorzugt entweder mindestens ein Polytetrahydrofurandiol (a221) oder mindestens ein Polycaprolactondiol (a222) und besonders bevorzugt mindestens ein Polycaprolactondiol (a222). Der Einbau eines Polycaprolactondiol (a222) bewirkt dabei eine Verbesserung der Hochtemperaturfestigkeit der erhaltenen Beschichtung.

Bei dem Polytetrahydrofurandiol (a221) handelt es sich um einen dihydroxyfunktionellen Polyether mit der Wiederholungseinheit H-[-O-CH₂-CH₂-CH₂-CH₂-]ₖ-OH, worin k eine positive ganze Zahl ist, die zu dem mittleren Molgewicht des statistischen Polymerengemisches führt. Werte für k liegen zumeist zwischen 2 und 8, bevorzugt zwischen 3 und 7, besonders bevorzugt zwischen 4 und 6.

Das Polytetrahydrofurandiol (a221) weist ein zahlenmittleres Molekulargewicht Mₙ gemessen mit Gelpermeationschromatographie gegen Polystyrolstandard in Tetrahydrofuran als Lösungsmittel bis zu 1000 g/mol auf. Nach dieser Methode werden die Molekulargewichte in der vorliegenden Beschreibung angegeben, wenn nicht anders angegeben.

Geeignete Polytetrahydrofurane können beispielsweise durch kationische Polymerisation von Tetrahydrofuran in Gegenwart von sauren Katalysatoren, wie z. B. Schwefelsäure oder Fluoroschwefelsäure, hergestellt werden. Derartige Herstellungsverfahren sind dem Fachmann bekannt. Bevorzugt handelt es sich um streng lineare Polytetrahydrofurane.

Bei der Komponente (a222) handelt es sich um ein Polycaprolactondiol mit einem zahlenmittleren Molekulargewicht Mₙ gemessen mit Gelpermeationschromatographie gegen Polystyrolstandard unter 600 g/mol. Dabei handelt es sich formal um ein Anlagerungsprodukt von Caprolacton an ein Diol HO-R-OH, das die Formel

HO-[-CH₂-CH₂-CH₂-CH₂-CH₂-(CO)-O]ₙ-R-OH

oder

HO-[-CH₂-CH₂-CH₂-CH₂-CH₂-(CO)-O]ₙ₁-R-[-O-(CO)-CH₂-CH₂-CH₂-CH₂-CH2-]ₙ₂-OH

aufweist,
worin
n, n1 und n2 für positive ganze Zahlen stehen, für die gilt n = 1 bis 5 und (n1 + n2) = 1 bis 5 und
R einen zweibindigen aliphatischen oder cycloaliphatischen Rest mit mindestens einem Kohlenstoffatom, bevorzugt 2 bis 20, besonders bevorzugt 2 bis 10, ganz besonders bevorzugt 3 bis 6 Kohlenstoffatomen.

Aliphatische Reste R sind beispielsweise lineares oder verzweigtes Alkylen, z.B. Methylen, 1,2-Ethylen, 1,2- oder 1,3-Propylen, 1,2-, 1,3- oder 1,4-Butylen, 1,1-Dimethyl-1,2-ethylen oder 1,2-Dimethyl-1,2-ethylen, 1,5-Pentylen, 1,6-Hexylen, 1,8-Octylen, 1,10-Decylen, oder 1,12-Dodecylen. Bevorzugt sind 1,2-Ethylen, 1,2- oder 1,3-Propylen, 1,4-Butylen und 1,5-Pentylen, besonders bevorzugt 1,4-Butylen und 1,6-Hexylen.

Denkbar, wenn auch weniger bevorzugt, sind cycloaliphatische Reste, beispielsweise Cyclopropylen, Cyclopentylen, Cyclohexylen, Cyclooctylen und Cyclododecylen.

Bei der Komponente (a23) handelt es sich um mindestens eine Dicarbonsäure, ausgewählt aus der Gruppe bestehend aus Verbindungen der Formel (la) 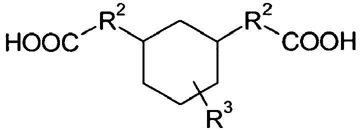 und/oder Verbindungen der Formel (Ib)

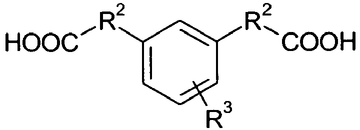

Darin bedeuten
R² eine Einfachbindung oder einen 1 bis 3 Kohlenstoffatome aufweisenden, zweiwertigen Alkylenrest und
R³ Wasserstoff oder einen 1 bis 10-Kohlenstoffatome aufweisenden Alkylrest.

Beispiele für R² sind eine Einfachbindung, Methylen, 1,2-Ethylen, 1,3-Propylen und 1,2-Propylen, bevorzugt eine Einfachbindung, Methylen oder 1,2-Ethylen, besonders bevorzugt eine Einfachbindung oder Methylen und ganz besonders bevorzugt eine Einfachbindung.

Beispiele für R³ sind Wasserstoff, Methyl, Ethyl, tert.-Butyl, n-Hexyl, n-Octyl und n-Decyl, bevorzugt sind Wasserstoff und Methyl, besonders bevorzugt ist Wasserstoff.

Beispiele für die Komponente (a23) sind Isophthalsäure, 1,3-Cyclohexandicarbonsäure, 4-Methyl-1,3-cyclohexandicarbonsäure und 1,3-Phenylendiessigsäure, bevorzugt sind Isophthalsäure und 1,3-Cyclohexandicarbonsäure.

Die Dicarbonsäure (a23) kann als freie Säure oder in Form ihrer Derivate eingesetzt werden.

Unter Derivaten werden bevorzugt verstanden
- die betreffenden Anhydride in monomerer oder auch polymerer Form,
- Mono- oder Dialkylester, bevorzugt Mono- oder Di-C₁-C₄-alkylester, besonders bevorzugt Mono- oder Dimethylester oder die entsprechenden Mono- oder Diethylester,
- ferner Mono- und Divinylester sowie
- gemischte Ester, bevorzugt gemischte Ester mit unterschiedlichen C₁-C₄-Alkylkomponenten, besonders bevorzugt gemischte Methylethylester.

C₁-C₄-Alkyl bedeutet im Rahmen dieser Schrift Methyl, Ethyl, iso-Propyl, n-Propyl, n-Butyl, iso-Butyl, sek-Butyl und tert-Butyl, bevorzugt Methyl, Ethyl und n-Butyl, besonders bevorzugt Methyl und Ethyl und ganz besonders bevorzugt Methyl.

In untergeordneten Mengen können optional auch andere Dicarbonsäuren als Komponente (a24) eingesetzt werden, beispielsweise Oxalsäure, Malonsäure, Bernsteinsäure, Glutarsäure, Adipinsäure, Pimelinsäure, Korksäure, Azelainsäure, Sebacinsäure, Undecan-α,ω-dicarbonsäure, Dodecan-α, ω -dicarbonsäure, cis- und trans-Cyclohexan-1,2-dicarbonsäure, cis- und trans-Cyclohexan-1,3-dicarbonsäure, cis- und trans-Cyclohexan-1,4-dicarbonsäure, cis- und trans-Cyclopentan-1,2-dicarbonsäure, cis- und trans-Cyclopentan-1,3-dicarbonsäure.

Die Komponente (a24) nimmt in der Regel 0 bis 15 mol% der COOH-funktionellen Bausteine, bevorzugt 0 bis 10 mol%, besonders bevorzugt 0 mol% ein.

Bei der Komponente (a3) handelt es sich um mindestens ein, beispielsweise ein bis drei, bevorzugt ein bis zwei und besonders bevorzugt genau eine Verbindung mit genau einer gegenüber Isocyanat reaktiven Gruppe und genau einer radikalisch polymerisierbaren Gruppe.

Gegenüber Isocyanat reaktive Gruppen können z.B. sein -OH, -SH, -NH₂ und -NHR¹, wobei R¹ Wasserstoff oder einen C₁-C₄-Alkylrest, wie z.B. Methyl, Ethyl, n-Propyl, iso-Propyl, n-Butyl, iso-Butyl, sek-Butyl oder tert-Butyl, bedeutet. Gegenüber Isocyanat reaktive Gruppen können bevorzugt sein -OH, -NH₂ oder -NHR¹, besonders bevorzugt -OH oder -NH₂ und ganz besonders bevorzugt -OH.

Komponenten (a3) können z.B. Monoester von α,β-ungesättigten Carbonsäuren, wie Acrylsäure, Methacrylsäure, Crotonsäure, Itaconsäure, Fumarsäure, Maleinsäure, Acrylamidoglykolsäure, Methacrylamidoglykolsäure, oder Vinylether mit Diolen sein, die vorzugsweise 2 bis 20 C-Atome und zwei Hydroxygruppen aufweisen. Beispiele für solche Diole sind Ethylenglykol, Diethylenglykol, Triethylenglykol, 1,2-Propylenglykol, 1,3-Propylenglykol, 1,1-Dimethyl-1,2-Ethandiol, Dipropylenglykol, Triethylenglykol, Tetraethylenglykol, Pentaethylenglykol, Tripropylenglykol, 1,2-, 1,3- oder 1,4-Butandiol, 1,5-Pentandiol, Neopentylglykol, 1,6-Hexandiol, 2-Methyl-1,5-pentandiol, 2-Ethyl-1,4-butandiol, 1,4-Dimethylolcyclohexan, 2,2-Bis(4-hydroxycyclohexyl)propan, 2-Ethyl-1,3-hexandiol, 2,4-Diethyl-1,3-octandiol, 2,4-Diethyl-1,5-octandiol oder 2-Propyl-1,3-heptandiol sein.

Bevorzugt sind die Monoester von Acrylsäure oder Methacrylsäure mit den aufgeführten Diolen.

Besonders bevorzugt verwendet werden 2-Hydroxyethyl(meth)acrylat, 2- oder 3-Hydroxypropyl(meth)acrylat, 1,4-Butandiolmono(meth)acrylat, Neopentylglykolmono-(meth)acrylat, 1,5-Pentandiolmono(meth)acrylat, 1,6-Hexandiolmono(meth)acrylat, sowie 4-Hydroxybutylvinylether.

Ganz besonders bevorzugt sind 2-Hydroxyethylacrylat, 2-Hydroxyethylmethacrylat, 2- oder 3-Hydroxypropylacrylat und 1,4-Butandiolmonoacrylat.

Insbesondere bevorzugt sind 2-Hydroxyethylacrylat, 2-Hydroxyethylmethacrylat und 2-Hydroxypropylacrylat, speziell 2-Hydroxyethylacrylat.

Die Urethan(meth)acrylate (A) sind, bezogen auf 100 mol% NCO-Gruppen in (a1), in der Regel aufgebaut wie folgt:
(a2) 25 bis 75 mol%, bevorzugt 30 bis 70, besonders bevorzugt 40 bis 60, ganz besonders bevorzugt 45 bis 55 und insbesondere 50 mol% bezogen auf Hydroxygruppen,
(a3) 25 bis 75 mol%, bevorzugt 30 bis 70, besonders bevorzugt 40 bis 60, ganz besonders bevorzugt 45 bis 55 und insbesondere 50 mol% bezogen auf gegenüber Isocyanat reaktive Gruppen,
mit der Maßgabe, daß die Summe immer 100 mol% ergibt.

Bevorzugt weisen die Verbindungen (A) eine Doppelbindungsdichte zwischen 0,3 und 1,6 mol/kg auf.

Durch die angegebene Wahl der Aufbaukomponenten der Urethan(meth)acrylate (A) beträgt der Schmelzpunkt der Urethan(meth)acrylate (A) in Kombination mit dem Reaktivverdünner (B) weniger als 25 °C, bevorzugt weniger als 0 °C.

Die Herstellung der Urethan(meth)acrylat (A) erfolgt in der Regel durch Mischen der Komponenten in beliebiger Reihenfolge, gegebenenfalls bei erhöhter Temperatur. Bevorzugt wird dabei das Diisocyanat (a1) gegebenenfalls in einem Lösungsmittel vorgelegt, und dazu das Polyesterdiol (a2) zugegeben, bevorzugt in mehreren Schritten. Nachdem die gegenüber Isocyanat reaktiven Gruppen in (a2) überwiegend oder vollständig abreagiert sind, soll heißen zu mindestens 60%, bevorzugt zu mindestens 75%, besonders bevorzugt zu mindestens 85%, ganz besonders bevorzugt zu mindestens 90% und insbesondere zu mindestens 95%, wird abschließend die Verbindung (a3) zugegeben und die Reaktion vervollständigt, bis das Reaktionsgemisch im wesentlichen keine freien NCO-Gruppen mehr aufweist. Dies bedeutet, daß der NCO-Gehalt im Reaktionsgemisch unter 1 Gew%, bevorzugt unter 0,75 Gew%, besonders bevorzugt unter 0,5 Gew%, ganz besonders bevorzugt unter 0,25 Gew% und insbesondere unter 0,1 Gew% beträgt.

In einer bevorzugten Ausführungsform wird das Polyesterdiol (a2) gelöst in der Komponente (B) und/oder (C), bevorzugt in (B) vorgelegt, so daß diese Komponente als Lösungsmittel für die Herstellung des Urethan(meth)acrylates (A) fungiert.

Es ist auch möglich, wenn auch weniger bevorzugt, sämtliche Komponenten mit gegenüber Isocyanat reaktiven Gruppen zur Verbindung (a1) hinzuzugeben.

In der Regel wird die Reaktion bei Temperaturen zwischen 5 und 100 °C, bevorzugt zwischen 20 bis 90 °C und besonders bevorzugt zwischen 40 und 80°C und insbesondere zwischen 60 und 80 °C durchgeführt.

Bevorzugt wird während der Herstellung des Urethan(meth)acrylats unter wasserfreien Bedingungen gearbeitet.

Wasserfrei bedeutet dabei, daß der Wassergehalt im Reaktionssystem nicht mehr als 5 Gew% beträgt, bevorzugt nicht mehr als 3 Gew% und besonders bevorzugt nicht mehr als 1 Gew%, ganz besonders bevorzugt nicht mehr als 0,75 und insbesondere nicht mehr als 0,5 Gew%.

Bevorzugt wird die Reaktion in Gegenwart mindestens eines sauerstoffhaltigen Gases durchgeführt, z.B. Luft oder Luft-Stickstoff-Gemische oder Gemische aus Sauerstoff oder einem sauerstoffhaltigen Gas mit einem unter den Reaktionsbedingungen inerten Gas, die einen Sauerstoffgehalt unter 15, bevorzugt unter 12, besonders bevorzugt unter 10, ganz besonders bevorzugt unter 8 und insbesondere unter 6 Vol% aufweisen.

Zur Stabilisierung der radikalisch polymerisierbaren Verbindungen werden vorzugsweise 0,001 bis 2 Gew.-%, insbesondere 0,005 bis 1,0 Gew.-% Polymerisationsinhibitoren der Reaktion zugesetzt. Dabei handelt es sich um die üblichen, zur Behinderung der radikalischen Polymerisation geeigneten Verbindungen, z. B. um Hydrochinone oder Hydrochinonmonoalkylether, 2,6-Di-tert.-butylphenole, wie 2,6-Di-tert.-butylkresol, Nitrosamine, Phenothiazine oder Phosphorigsäureester.

Die Reaktion kann auch in Gegenwart eines inerten Solvens durchgeführt werden, z.B. Aceton, Iso-butyl-methylketon, Toluol, Xylol, Butylacetat, Methoxypropylacetat oder Ethoxyethylacetat. Bevorzugt wird die Reaktion jedoch in Abwesenheit eines Solvens oder in Gegenwart der Verbindung (B) als Lösungsmittel durchgeführt.

Die Reaktion kann thermisch oder katalysiert erfolgen. Typische Katalysatoren für eine derartige Umsetzung sind Zink-organische Verbindungen, wie Zink-Acetylacetonat oder Zink-2-ethylcaproat, oder einer Tetraalkylammonium-Verbindung, wie N,N,N-Trimethyl-N-2-hydroxypropylammonium hydroxid oder wie N,N,N-Trimethyl-N-2-hydroxypropylammonium 2-ethylhexanoat, oder Zinn-organischen Verbindungen, wie Dibutylzinn dilaurat.

Be dem monoethylenisch ungesättigten Reaktivverdünner (B) kann es sich um eine Verbindung (B1) handeln, die wenigstens eine cycloaliphatische Gruppe enthält, oder um eine Verbindung (B2), die mindestens eine heterocyclische Gruppe enthält.

Verbindungen (B1) sind Ester der (Meth)acrylsäure mit Cycloalkanolen oder Bicycloalkanolen, wobei das Cycloalkanol oder Bicycloalkanol von 3 bis 20 Kohlenstoffatomen, bevorzugt 5 bis 10 Kohlenstoffatome aufweist und gegebenenfalls mit C₁- bis C₄-Alkyl substituiert sein kann.

Beispiele für Cycloalkanol und Bicycloalkanol sind Cyclopentanol, Cyclohexanol, Cyclooctanol, Cyclododecanol, 4-Methyl cyclohexanol, 4-iso Propyl cyclohexanol, 4-tert. Butyl cyclohexanol (bevorzugt cis konfiguriert), Dihydrodicyclopentadienylalkohol, Isoborneol und Norbornylalkohol. Bevorzugt ist Isoborneol, Cyclohexanol und 4-tert. Butyl cyclohexanol.

Als Komponente (B2) können grundsätzlich alle monofunktionellen Ester α,β-ethylenisch ungesättigter Carbonsäuren mit einem monofunktionellen Alkanol eingesetzt werden, das wenigstens einen gesättigten 5- oder 6-gliedrigen Heterocyclus mit einem oder zwei Sauerstoffatomen im Ring als Strukturelement aufweist. Vorzugsweise leitet sich die Komponente (B) von Acrylsäure oder Methacrylsäure ab. Beispiele für geeignete Verbindungen der Komponente (B2) umfassen Verbindungen der allgemeinen Formel (I) 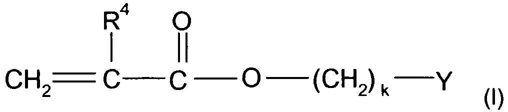 worin
- R⁴: ausgewählt ist unter H und CH₃ und insbesondere für H steht,
- k: eine Zahl von 0 bis 4 und insbesondere 0 oder 1 ist, und
- Y: für einen 5- oder 6-gliedrigen, gesättigten Heterocyclus mit einem oder zwei Sauerstoffatomen steht, wobei der Heterocyclus gegebenenfalls mit C₁-C₄-Alkyl, z. B. Methyl, Ethyl, n-Propyl, Isopropyl, n-Butyl, 2-Butyl, Isobutyl oder tert.-Butyl, substituiert ist.

Vorzugsweise leitet sich der 5- oder 6-gliedrige, gesättigte Heterocyclus von Tetrahydrofuran, Tetrahydropyran, 1,3-Dioxolan, 1,3- oder 1,4-Dioxan ab.

Besonders bevorzugt ist die Komponente (B2) ausgewählt unter Trimethylolpropanmonoformalacrylat, Glycerinmonoformalacrylat, 4-Tetrahydropyranylacrylat, Isobornylacrylat, 2-Tetrahydropyranylmethylacrylat, Tetrahydrofurfurylacrylat und Mischungen davon. Ganz besonders bevorzugt wird als Komponente (B2) Trimethylolpropanmonoformalacrylat oder Isobornylacrylat eingesetzt.

Des weiteren kann als weiterer Bestandteil (C) noch eine andere multifunktionelle polymerisationsfähige Verbindung eingesetzt werden, als die Verbindungen (A) oder (B). Multifunktionelle, polymerisationsfähige Verbindungen sind solche mit mehr als einer, bevorzugt mit mindestens zwei, besonders bevorzugt mit genau zwei radikalisch polymerisationsfähigen Gruppen.

Multifunktionelle, polymerisationsfähige Verbindungen sind bevorzugt multifunktionelle (Meth)acrylate, die mehr als 1, bevorzugt 2-10, besonders bevorzugt 2-6, ganz besonders bevorzugt 2-4 und insbesondere 2-3 (Meth)acrylatgruppen, bevorzugt Acrylatgruppen tragen.

Dies können beispielsweise Ester der (Meth)acrylsäure mit entsprechend mindestens zweiwertigen Polyalkoholen sein.

Derartige Polyalkohole sind beispielsweise mindestens zweiwertige Polyole, Polyether- oder Polyesterole oder Polyacrylatpolyole mit einer mittleren OH-Funktionalität von mindestens 2, bevorzugt 3 bis 10, geeignet.

Beispiele für multifunktionelle, polymerisationsfähige Verbindungen sind Ethylenglykoldiacrylat, 1,2-Propandioldiacrylat, 1,3-Propandioldiacrylat, 1,4-Butandioldiacrylat, 1,3-Butandioldiacrylat, 1,5-Pentandioldiacrylat, 1,6-Hexandioldiacrylat, 1,8-Octandioldiacrylat, Neopentylglykoldiacrylat, 1,1-, 1,2-, 1,3-und 1,4-Cyclohexandimethanoldiacrylat, 1,2-, 1,3- oder 1,4-Cyclohexandioldiacrylat, Trimethylolpropantriacrylat, Ditrimethylolpropanpenta- oder -hexaacrylat, Pentaerythrittri- oder -tetraacrylat, Glycerindi- oder -triacrylat, sowie Di- und Polyacrylate von Zuckeralkoholen, wie beispielsweise Sorbit, Mannit, Diglycerol, Threit, Erythrit, Adonit (Ribit), Arabit (Lyxit), Xylit, Dulcit (Galactit), Maltit oder Isomalt, oder von Polyesterpolyolen, Polyetherolen, Poly-1,3-Propandiol mit einer Molmasse zwischen 134 und 1178, Polyethylenglykol mit einer Molmasse zwischen 106 und 898, sowie Epoxy(meth)acrylate, Urethan(meth)acrylate oder Polycarbonat(meth)acrylate.

Weitere Beispiele sind (Meth)Acrylate von Verbindungen der Formel (IIa) bis (IId), 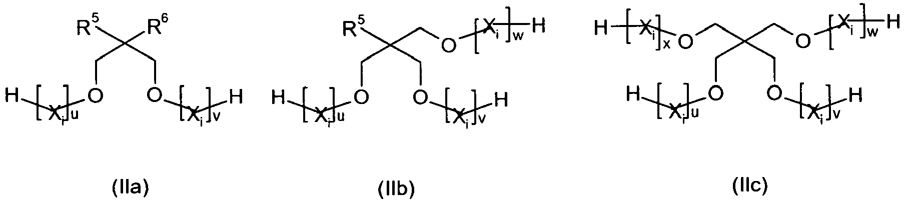 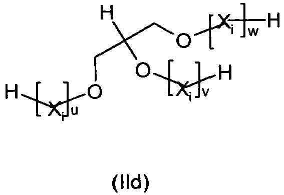 worin
R⁵ und R⁶ unabhängig voneinander Wasserstoff oder gegebenenfalls durch Aryl, Alkyl, Aryloxy, Alkyloxy, Heteroatome und/oder Heterocyclen substituiertes C₁- C₁₈-Alkyl,
u, v, w, x unabhängig voneinander je für eine ganze Zahl von 1 bis 10, bevorzugt 1 bis 5 und besonders bevorzugt 1 bis 3 steht und
jedes Xᵢ für i = 1 bis u, 1 bis v, 1 bis w und 1 bis x unabhängig voneinander ausgewählt sein kann aus der Gruppe -CH₂-CH₂-O-, -CH₂-CH(CH₃)-O-, -CH(CH₃)-CH₂-O-, -CH₂-C(CH₃)₂-O-, -C(CH₃)₂-CH₂-O-, -CH₂-CHVin-O-, -CHVin-CH₂-O-, -CH₂-CHPh-O- und -CHPh-CH₂-O-, bevorzugt aus der Gruppe -CH₂-CHrO-, -CH₂-CH(CH₃)-O- und -CH(CH₃)-CH₂-O-, und besonders bevorzugt -CH₂-CH₂-O-,
worin Ph für Phenyl und Vin für Vinyl steht.

Darin bedeuten gegebenenfalls durch Aryl, Alkyl, Aryloxy, Alkyloxy, Heteroatome und/oder Heterocyclen substituiertes C₁-C₁₈-Alkyl beispielsweise Methyl, Ethyl, Propyl, Isopropyl, n-Butyl, sec-Butyl, tert.-Butyl, Pentyl, Hexyl, Heptyl, Octyl, 2-Etylhexyl, 2,4,4-Trimethylpentyl, Decyl, Dodecyl, Tetradecyl, Hetadecyl, Octadecyl, 1,1-Dimethylpropyl, 1,1-Dimethylbutyl, 1,1,3,3-Tetramethylbutyl, bevorzugt Methyl, Ethyl oder n-Propyl, ganz besonders bevorzugt Methyl oder Ethyl.

Bevorzugt handelt es sich dabei um (Meth)Acrylate von ein- bis zwanzigfach und besonders bevorzugt drei- bis zehnfach ethoxyliertem, propoxyliertem oder gemischt ethoxyliertem und propoxyliertem und insbesondere ausschließlich ethoxyliertem Neopentylglykol, Trimethylolpropan, Trimethylolethan oder Pentaerythrit.

Bevorzugte multifunktionelle, polymerisationsfähige Verbindungen sind Ethylenglykoldiacrylat, 1,2-Propandioldiacrylat, 1,3-Propandioldiacrylat, 1,4-Butandioldiacrylat, 1,6-Hexandioldiacrylat, Trimethylolpropantriacrylat, Pentaerythrittetraacrylat, Polyestepolyolenacrylate, Polyetherolacrylate und Triacrylat von ein- bis zwanzigfach alkoxyliertem, besonders bevorzugt ethoxyliertem Trimethylolpropan.

Ganz besonders bevorzugte multifunktionelle, polymerisationsfähige Verbindungen sind 1,4-Butandioldiacrylat, 1,6-Hexandioldiacrylat, Trimethylolpropantriacrylat, Pentaerythrittetraacrylat und Triacrylat von ein- bis zwanzigfach ethoxyliertem Trimethylolpropan.

Es stellt eine bevorzugte Ausführungsform der vorliegenden Erfindung dar, daß es sich bei der Verbindung (C) um mindestens ein, bevorzugt genau ein Urethan(meth)acrylat, besonders bevorzugt um ein difunktionelles Urethan(meth)acrylat mit einem gewichtsmittleren Molgewicht Mw unter 1000 g/mol, bevorzugt unter 750 und besonders bevorzugt unter 500 g/mol handelt.

Bei diesen Urethan(meth)acrylaten handelt es sich bevorzugt um Reaktionsprodukt eines (cyclo)aliphatischen Diisocyanates mit mindestens einer, bevorzugt genau einer Verbindung mit genau einer gegenüber Isocyanat reaktiven Gruppe und genau einer radikalisch polymerisierbaren Gruppe.

Als (cyclo)aliphatische Diisocyanate kommen dabei die oben genannten Diisocyanate in Frage, bevorzugt sind Hexamethylendiisocyanat, 1,3-Bis(isocyanatomethyl)cyclohexan, Isophorondiisocyanat und 4,4'- oder 2,4'-Di(isocyanatocyclohexyl)methan, besonders bevorzugt sind Isophorondiisocyanat und 4,4'- oder 2,4'-Di(isocyanatocyclohexyl)methan, ganz besonders bevorzugt ist Isophorondiisocyanat.

In einer bevorzugten Ausführungsform wird als (cyclo)aliphatisches Diisocyanat in (C) das gleiche Diisocyanat verwendet, wie im Urethan(meth)acrylat (A), also das gleiche wie Verbindung (a1).

Als Verbindung mit genau einer gegenüber Isocyanat reaktiven Gruppe und genau einer radikalisch polymerisierbaren Gruppe kommen beispielsweise die oben als Verbindungen (a3) angeführten Verbindungen in Frage, bevorzugt sind 2-Hydroxyethyl(meth)acrylat, 2- oder 3-Hydroxypropyl(meth)acrylat, 1,4-Butandiolmono(meth)acrylat, Neopentylglykolmono-(meth)acrylat, 1,5-Pentandiolmono(meth)acrylat und 1,6-Hexandiolmono(meth)acrylat, besonders bevorzugt sind 2-Hydroxyethylacrylat, 2-Hydroxyethylmethacrylat und 2-Hydroxypropylmethacrylat, und ganz besonders bevorzugt ist 2-Hydroxyethylacrylat.

Es stellt eine bevorzugte Ausführungsform dar, daß als Verbindung mit genau einer gegenüber Isocyanat reaktiven Gruppe und genau einer radikalisch polymerisierbaren Gruppe in (C) die gleiche Verbindung eingesetzt wird wie für das Urethan(meth)acrylat (A), also die gleiche Verbindung wie (a3).

Wenn eine Verbindung (C) in den Mischungen anwesend ist, stellt es eine bevorzugte Herstellung solcher Mischungen dar, zunächst das Urethan(meth)acrylat (A) wie oben beschrieben herzustellen, man jedoch das Polyesterdiol (a2) mit einem stöchiometrischen Überschuß an Diisocyanat (a1) umsetzt. Nachdem die gegenüber Isocyanat reaktiven Gruppen in (a2) überwiegend oder vollständig abreagiert sind, soll heißen zu mindestens 60%, bevorzugt zu mindestens 75%, besonders bevorzugt zu mindestens 85%, ganz besonders bevorzugt zu mindestens 90% und insbesondere zu mindestens 95%, wird abschließend die Verbindung (a3) zugegeben und die Reaktion vervollständigt, bis das Reaktionsgemisch im wesentlichen keine freien NCO-Gruppen mehr aufweist.

Der Überschuß an Diisocyanat (a1) wird dabei so bemessen, daß er der gewünschten Menge von (C) in den Beschichtungsmassen (siehe unten) entspricht.

Es ist selbstverständlich aber auch möglich, die Verbindungen (A) und (C) getrennt voneinander herzustellen und anschließend im gewünschten Verhältnis miteinander zu vermischen.

In einer bevorzugten Ausführungsform kann es sinnvoll sein, mindestens eine Verbindung (C1) mit mindestens einer sauren Gruppe und mindestens einer radikalisch polymerisierbaren Gruppe anstelle der oder zusätzlich zur multifunktionellen, polymerisationsfähigen Verbindung (C) zuzusetzen.

Bei der sauren Gruppe kann es sich bevorzugt um eine Carboxyl-, Sulfonsäure-, Phosphonsäure- oder Phosphorsäuregruppe handeln, besonders bevorzugt um eine Carboxyl- oder Phosphonsäuregruppe.

Damit seien auch Gruppen erfaßt, ais denen sich saure Gruppen herausbilden können, beispielsweise Anhydridgruppen.

Die Verbindungen (C1) weisen beispielsweise ein bis drei, bevorzugt ein bis zwei und besonders bevorzugt genau eine saure Gruppe auf.

Die Verbindungen (C1) weisen beispielsweise ein bis drei, bevorzugt ein bis zwei und besonders bevorzugt genau eine radikalisch polymerisierbare Gruppe auf. Beispiele für Verbindungen (C1) sind Acrylsäure, Methacrylsäure, Ethacrylsäure, α-Chloracrylsäure, Crotonsäure, Maleinsäure, Maleinsäureanhydrid, Vinylsulfonsäure, Vinylphosphonsäure, Fumarsäure, Itaconsäure, Citraconsäure, Mesaconsäure, Glutaconsäure, Aconitsäure, Allylsulfonsäure, Sulfoethylacrylat, Sulfomethacrylat, Sulfopropylacrylat, Sulfopropylmethacrylat, 2-Hydroxy-3-acryloxypropylsulfonsäure, 2-Hydroxy-3-methacryl-oxypropylsulfonsäure, Allylphosphonsäure, Styrolsulfonsäure, 2-Acrylamido-2methylpropansulfonsäure, 2-Acrylamido-2-methylpropanphosphonsäure sowie deren Amide, Hydroxyalkylester und aminogruppen- oder ammoniumgruppenhaltige Ester und Amide. Bevorzugte Verbindungen (C1) sind Acrylsäure, Methacrylsäure, Maleinsäureanhydrid, Vinylsulfonsäure und Vinylphosphonsäure, besonders bevorzugt sind Acrylsäure, Methacrylsäure und Vinylphosphonsäure.

Die Verbindungen (C1) bewirken in der Regel eine verbesserte Haftung auf den Substarten, insbesondere auf metallischen Substraten.

Die Zusammensetzung der erfindungsgemäßen Beschichtungsmassen ist in der Regel wie folgt:
(A) 20 bis 90 Gew.-%, bevorzugt 30 bis 80 Gew.-% und insbesondere 40 bis 70 Gew.-%
(B) 10 bis 80 Gew.-%, vorzugsweise 20 bis 60 Gew.-% und insbesondere 30 bis 50 Gew.-%
(C) 0 bis 50 Gew.-% und bevorzugt 0 bis 40 Gew.-%, besonders bevorzugt 1 bis 20 Gew%, ganz besonders bevorzugt 2 bis 15 Gew%,
   (C1) 0 bis 10 Gew%, bevorzugt 0,1 bis 6 Gew%, besonders bevorzugt bevorzugt 0,5 bis 4 Gew%,
mit der Maßgabe, daß die Summe immer 100 Gew% beträgt.

Ferner können die erfindungsgemäßen Beschichtungsmassen bezogen auf die Summe der Verbindungen (A), (B) und (C) zusätzlich 0 bis 10 Gew% mindestens eines Photoinitiators (D) enthalten.

Photoinitiatoren (D) können beispielsweise dem Fachmann bekannte Photoinitiatoren sein, z.B. solche in "Advances in Polymer Science", Volume 14, Springer Berlin 1974 oder in K. K. Dietliker, Chemistry and Technology of UV- and EB-Formulation for Coatings, Inks and Paints, Volume 3; Photoinitiators for Free Radical and Cationic Polymerization, P. K. T. Oldring (Eds), SITA Technology Ltd, London, genannten.

In Betracht kommen solche Photoinitiatoren, wie sie beschrieben sind in WO 2006/005491 A1, Seite 21, Zeile 18 bis Seite 22, Zeile 2 (entspricht

US 2006/0009589 A1, Absatz [0150]), was hiermit durch Bezugnahme Bestandteil der vorliegenden Offenbarung sei.

Geeignet sind auch nicht- oder wenig vergilbende Photoinitiatoren vom Phenylglyoxalsäureestertyp, wie in DE-A 198 26 712, DE-A 199 13 353 oder WO 98/33761 beschrieben.

Bevorzugt unter diesen Photoinitiatoren sind 2,4,6-Trimethylbenzoyldiphenylphosphinoxid, Ethyl-2,4,6-trimethylbenzoylphenylphosphinat, Bis-(2,4,6-trimethylbenzoyl)-phenylphosphinoxid, Benzophenon, 1-Benzoylcyclohexan-1-ol, 2-Hydroxy-2,2-dimethylacetophenon und 2,2-Dimethoxy-2-phenylacetophenon.

Ferner können die erfindungsgemäßen Beschichtungsmassen bezogen auf die Summe der Verbindungen (A), (B) und (C) zusätzlich 0 bis 10 Gew% mindestens eines UV Stabilisators (E) enthalten.

Geeignete Stabilisatoren (E) umfassen typische UV-Absorber wie Oxanilide, Triazine und Benzotriazol (letztere erhältlich als Tinuvin® -Marken der Ciba-Spezialitätenchemie) und Benzophenone.

Diese können allein oder zusammen mit bezogen auf die Summe der Verbindungen (A), (B) und (C) zusätzlich 0 bis 5 Gew% geeigneten Radikalfängern (F), beispielsweise sterisch gehinderten Aminen wie 2,2,6,6-Tetramethylpiperidin, 2,6-Di-tert.-butylpiperidin oder deren Derivaten, z. B. Bis-(2,2,6,6-tetra-methyl-4-piperidyl)sebacinat, eingesetzt werden.

Ferner können die erfindungsgemäßen Beschichtungsmassen bezogen auf die Summe der Verbindungen (A), (B) und (C) zusätzlich 0 bis 10 Gew% weiterer lacktypischer Additive (G) enthalten.

Als weitere lacktypische Additive (G) können beispielsweise Antioxidantien, Aktivatoren (Beschleuniger), Füllmittel, Pigmente, Farbstoffe, antistatische Agentien, Flammschutzmittel, Verdicker, thixotrope Agentien, oberflächenaktive Agentien, Viskositätsmodifikatoren, Plastifizierer oder Chelatbildner verwendet werden.

Weiterhin können ein oder mehrere thermisch aktivierbare Initiatoren zugesetzt werden, z.B. Kaliumperoxodisulfat, Dibenzoylperoxid, Cyclohexanonperoxid, Di-tert.-Butylperoxid, Azobis-iso-butyronitril, Cyclohexylsulfonylacetylperoxid, Di-iso-propylpercarbonat, tert-Butylperoktoat oder Benzpinakol, sowie beispielsweise solche thermisch aktivierbare Initiatoren, die eine Halbwertszeit bei 80°C von mehr als 100 Stunden aufweisen, wie Di-t-Butylperoxid, Cumolhydroperoxid, Dicumylperoxid, t-Butylperbenzoat, silylierte Pinakole, die z. B. unter dem Handelsnamen ADDID 600 der Firma Wacker kommerziell erhältlich sind oder Hydroxylgruppen-haltige Amin-N-Oxide, wie 2,2,6,6-Tetramethylpiperidin-N-oxyl, 4-Hydroxy-2,2,6,6-Tetramethylpiperidin-N-oxyl etc.

Weitere Beispiele geeigneter Initiatoren sind in "Polymer Handbook", 2. Aufl., Wiley & Sons, New York beschrieben.

Als Verdicker kommen neben radikalisch (co)polymerisierten (Co)Polymerisaten, übliche organische und anorganische Verdicker wie Hydroxymethylcellulose oder Bentonit in Betracht.

Als Chelatbildner können z.B. Ethylendiaminessigsäure und deren Salze sowie β-Diketone verwendet werden.

Geeignete Füllstoffe umfassen Silikate, z. B. durch Hydrolyse von Siliciumtetrachlorid erhältliche Silikate wie Aerosil® der Fa. Degussa, Kieselerde, Talkum, Aluminiumsilikate, Magnesiumsilikate, Calciumcarbonate etc.

Die erfindungsgemäßen Beschichtungsmassen eignen sich als Formmassen, beispielsweise in Folien oder Schläuchen, die gegebenenfalls mit Fasern verstärkt sein können, oder zum Beschichten von Substraten wie Holz, Papier, Textil, Leder, Vlies, Kunststoffoberflächen, Glas, Keramik, mineralischen Baustoffen, wie Zement-Formsteine und Faserzementplatten, oder Metallen oder beschichteten Metallen, bevorzugt von Kunststoffen oder Metallen, insbesondere in Form von Folien, besonders bevorzugt Metallen.

Die Beschichtungsmitteln können insbesondere in Grundierungen, Füllern, pigmentierten Decklacken und Klarlacken im Bereich Autoreparatur- oder Großfahrzeuglackierung und Flugzeugen eingesetzt werden. Besonders geeignet sind solche Beschichtungsmittel für Anwendungen, in denen eine besonders hohe Applikationssicherheit, Außenwitterungsbeständigkeit, Härte und Flexibilität gefordert werden, wie in der Autoreparatur- und Großfahrzeuglackierung.

Insbesondere werden die erfindungsgemäßen Beschichtungsmassen als oder in Automobilklar- und -decklacke(n) eingesetzt. Weitere bevorzugte Einsatzgebiete sind Can-Coating und Coil-Coating.

Unter "Coil-Coating" versteht man das kontinuierliche Beschichten von Metallbändern mit meist flüssigen Beschichtungsstoffen. Gewalzte Metallbänder werden nach der Herstellung zum Lagern und Transportieren zu Rollen (sogenannten "coils") aufgewickelt. Diese Metallbänder stellen das Ausgangsmaterial für die meisten flächigen metallischen Werkstücke dar, beispielsweise Automobilteile, Karosserieteile, Geräteverkleidungen, Fassadenverkleidungen, Deckenverkleidungen oder Fensterprofile. Dazu werden die geeigneten Metallbleche mittels geeigneter Techniken wie Stanzen, Bohren, Falzen, Profilieren und/oder Tiefziehen ausgeformt. Größere Bauteile, wie beispielsweise Automobilkarosserien werden gegebenenfalls durch Verschweißen mehrerer Einzelteile zusammengefügt.

Zur Beschichtung werden 0,2 bis 2 mm dicke und bis zu 2 m breite Metallbänder mit einer Geschwindigkeit von bis zu 200 m/min durch eine coil-coating-Anlage transportiert und dabei beschichtet. Hierzu können beispielsweise kaltgewalzte Bänder aus weichen Stählen oder Baustählen, elektrolytisch verzinktes Feinblech, feuerverzinktes Stahlband oder Bänder aus Aluminium bzw. Aluminiumlegierungen eingesetzt werden. Typische Anlagen umfassen eine Aufgabestation, einen Bandspeicher, eine Reinigungs- und Vorbehandlungszone, eine erste Lackierstation nebst Einbrennofen und folgender Kühlzone, eine zweite Lackierstation mit Ofen, Kaschierstation und Kühlung sowie einen Bandspeicher und Aufwickler.

Charakteristisch für coil-coatings sind dünne Schichten der Beschichtungsmassen, die eine Trockenschichtdicke von zumeist deutlich unter 80 µm, oftmals unter 60 µm, unter 50 µm und sogar unter 40 µm aufweisen. Zudem werden die Bleche mit hohem Durchsatz verarbeitet, was kurze Verweilzeiten erforderlich macht, also nach Auftragen der Beschichtung eine Trocknung bei erhöhter Temperatur erforderlich macht, um die Beschichtungsmasse schnell belastbar zu machen.

Die Beschichtung der Substrate mit den erfindungsgemäßen Beschichtungsmassen erfolgt nach üblichen, dem Fachmann bekannten Verfahren, wobei man eine erfindungsgemäße Beschichtungsmasse oder eine solche enthaltend Lackformulierung auf das zu beschichtende Substrat in der gewünschten Stärke aufbringt und gegebenenfalls trocknet. Dieser Vorgang kann gewünschtenfalls ein- oder mehrfach wiederholt werden. Das Aufbringen auf das Substrat kann in bekannter Weise, z. B. durch Spritzen, Spachteln, Rakeln, Bürsten, Rollen, Walzen, Gießen, Laminieren, Hinterspritzen oder Coextrudieren erfolgen. Der Auftrag des Beschichtungsmittels kann auch elektrostatisch in Form von Pulver erfolgen (Pulverlacke). Die Beschichtungsstärke liegt in der Regel in einem Bereich von etwa 3 bis 1000 g/m² und vorzugsweise 10 bis 200 g/m².

Weiterhin wird ein Verfahren zum Beschichten von Substraten offenbart, bei dem man das eine erfindungsgemäßen Beschichtungsmasse oder eine solche enthaltende Lackformulierung, gegebenenfalls mit weiteren lacktypischen Additiven und thermisch, chemisch oder strahlungshärtbaren Harzen versetzt, auf das Substrat aufbringt und gegebenenfalls trocknet, mit Elektronenstrahlen oder UV Belichtung unter sauerstoffhaltiger Atmosphäre oder bevorzugt unter Inertgas härtet, gegebenenfalls bei Temperaturen bis zur Höhe der Trocknungstemperatur und anschließend bei Temperaturen bis zu 160°C, bevorzugt zwischen 60 und 160 °C, besonders bevorzugt zwischen 100 und 160 °C, thermisch behandelt.

Die Strahlungshärtung erfolgt mit energiereichem Licht, z.B. UV-Licht oder Elektronenstrahlen. Die Strahlungshärtung kann bei höheren Temperaturen erfolgen. Bevorzugt ist dabei eine Temperatur oberhalb der T_{g} des strahlungshärtbaren Bindemittels.

Strahlungshärtung heißt hier die radikalische Polymerisation von polymerisierbaren Verbindungen infolge einer elektromagnetischen und/oder korpuskularen Strahlung, bevorzugt UV-Licht im Wellenlängenbereich von λ=200 bis 700 nm und/oder Elektronenstrahlung im Bereich von 150 bis 300 keV und besonders bevorzugt mit einer Strahlungsdosis von mindestens 80, bevorzugt 80 bis 3000 mJ/cm².

Neben einer Strahlungshärtung können noch weitere Härtungsmechanismen involviert sein, beispielsweise thermische-, Feuchtigkeits-, chemische und/oder oxidative Härtung, bevorzugt thermische und Strahlungshärtung und besonders bevorzugt Strahlungshärtung allein.

Die Beschichtungsmittel können nach den unterschiedlichsten Spritzverfahren, wie z.B. Luftdruck-, Airless- oder Elektrostatik-Spritzverfahren unter Verwendung von Ein- oder Zweikomponenten-Spritzanlagen, aber auch durch Spritzen, Spachteln, Rakeln, Bürsten, Rollen, Walzen, Gießen, Laminieren, Hinterspritzen oder Coextrudieren ein- oder mehrfach appliziert werden.

Die Beschichtungsstärke liegt in der Regel in einem Bereich von etwa 3 bis 1000 g/m² und vorzugsweise 10 bis 200 g/m².

Die Trocknung und Aushärtung der Beschichtungen erfolgt im allgemeinen unter normalen Temperaturbedingungen, d.h. ohne Erhitzung der Beschichtung. Die erfindungsgemäßen Mischungen können jedoch auch zur Herstellung von Beschichtungen eingesetzt werden, die nach Applikation bei erhöhter Temperatur, z.B. bei 40 - 250°C, vorzugsweise 40 - 150°C und insbesondere bei 40 bis 100°C getrocknet und ausgehärtet werden. Dies ist begrenzt durch die Thermostabilität des Substrats.

Weiterhin wird ein Verfahren zum Beschichten von Substraten offenbart, bei dem man die erfindungsgemäße Beschichutngsmasse oder solche enthaltende Lackformulierungen, gegebenenfalls mit thermisch härtbaren Harzen versetzt, auf das Substrat aufbringt, trocknet, und anschließend mit Elektronenstrahlen oder UV Belichtung unter sauerstoffhaltiger Atmosphäre oder bevorzugt unter Inertgas härtet, gegebenenfalls bei Temperaturen bis zur Höhe der Trocknungstemperatur.

Das Verfahren zum Beschichten von Substraten kann auch so durchgeführt werden, daß nach dem Aufbringen der erfindungsgemäßen Beschichtungsmasse oder Lackformulierungen zunächst mit Elektronenstrahlen oder UV Belichtung unter Sauerstoff oder bevorzugt unter Inertgas bestrahlt wird, um eine Vorhärtung zu erzielen, anschlie-βend bei Temperaturen bis zu 160°C, bevorzugt zwischen 60 und 160 °C, thermisch behandelt und anschließend mit Elektronenstrahlen oder UV Belichtung unter Sauerstoff oder bevorzugt unter Inertgas endhärtet.

Gegebenenfalls kann, wenn mehrere Schichten des Beschichtungsmittels übereinander aufgetragen werden, nach jedem Beschichtungsvorgang eine Trocknung und/oder Strahlungshärtung erfolgen.

Als Strahlungsquellen für die Strahlungshärtung geeignet sind z.B. Quecksilber-Niederdruckstrahler, -Mitteldruckstrahler mit Hochdruckstrahler sowie Leuchtstoffröhren, Impulsstrahler, Metallhalogenidstrahler, Elektronenblitzeinrichtungen, wodurch eine Strahlungshärtung ohne Photoinitiator möglich ist, oder Excimerstrahler. Die Strahlungshärtung erfolgt durch Einwirkung energiereicher Strahlung, also UV-Strahlung oder Tageslicht, vorzugsweise Licht im Wellenlängenbereich von λ=200 bis 700 nm strahlt, besonders bevorzugt von λ=200 bis 500 nm und ganz besonders bevorzugt λ=250 bis 400 nm, oder durch Bestrahlung mit energiereichen Elektronen (Elektronenstrahlung; 150 bis 300 keV). Als Strahlungsquellen dienen beispielsweise Hochdruckquecksilberdampflampen, Laser, gepulste Lampen (Blitzlicht), Halogenlampen oder Excimerstrahler. Die üblicherweise zur Vernetzung ausreichende Strahlungsdosis bei UV-Härtung liegt im Bereich von 80 bis 3000 mJ/cm².

Selbstverständlich sind auch mehrere Strahlungsquellen für die Härtung einsetzbar, z.B. zwei bis vier.

Diese können auch in jeweils unterschiedlichen Wellenlängebereichen strahlen.

Die Trocknung und/oder thermische Behandlung kann auch zusätzlich zur oder anstelle der thermischen Behandlung durch NIR-Strahlung erfolgen, wobei als NIR-Strahlung hier elektromagnetische Strahlung im Wellenlängenbereich von 760 nm bis 2,5 µm, bevorzugt von 900 bis 1500 nm bezeichnet ist.

Die Bestrahlung kann gegebenenfalls auch unter Ausschluß von Sauerstoff, z. B. unter Inertgas-Atmosphäre, durchgeführt werden. Als Inertgase eignen sich vorzugsweise Stickstoff, Edelgase, Kohlendioxid, oder Verbrennungsgase. Des weiteren kann die Bestrahlung erfolgen, indem die Beschichtungsmasse mit transparenten Medien abgedeckt wird. Transparente Medien sind z. B. Kunststofffolien, Glas oder Flüssigkeiten, z. B. Wasser. Besonders bevorzugt ist eine Bestrahlung in der Weise, wie sie in der DE-A1 199 57 900 beschrieben ist.

Es stellt einen Vorteil der vorliegenden Erfindung dar, daß mit den erfindungsgemäßen Beschichtungsmassen Beschichtungen erhalten werden, die bei hoher Härte eine sehr gute Flexibilität aufweisen.

Die im Folgenden angegebenen Beispiele sollen die vorliegende Erfindung erläutern, ohne sie jedoch einzuschränken.

Die in dieser Schrift angegebenen %- und ppm-Angaben beziehen sich auf Gew.% und Gew.ppm, soweit nicht anders angegeben.

### Beispiele

### Vergleichsbeispiel 1: (Beispiel 1 aus WO 2008/155352 A)

### Herstellung eines Harzes auf Basis Polytetrahydrofuran-co-caprolacton:

300 Teile Polytetrahydrofuran-diol mit Molekulargewicht 1000 g/mol und 68,5 Teile Caprolacton wurden auf 100°C erhitzt und dann wurden 0,4 Teile Dibutyl-zinn-dilaurat zugegeben. Es wurde 6 Stunden bei 115°C reagieren lassen und dann abgekühlt. Es resultierte ein klares viskoses Produkt.

61,5 Teile dieses Produktes wurden mit 0,4 Teilen Hydrochinonmonomethylether und 1 Teil 2,6-di-tert.Butylkresol versetzt und auf 60°C aufgeheizt. Dann gab man innerhalb von 15 Minuten 21,4 Teile Isophoron-diisocyanat zu und ließ bei 80-85°C 2 Stunden reagieren, danach tropfte man innerhalb von 5 Minuten 11,2 Teile Hydroxyethylacrylat zu und ließ weitere 4 Stunden bei der angegebenen Temperatur weiterreagieren. Der NCO Wert ist danach auf 0 abgefallen. Das abgekühlte Produkt hatte eine Viskosität bei Raumtemperatur (23°C) von 332 Pas.

### Beispiel 1:

### Herstellung eines Polyesterdiols aus Polycaprolacton (Molgewicht ca. 400 g/mol) und Iso-Phthalsäure

200 Teile eines Polycaprolactons (CAPA® 2043 der Firma Perstorp) und 69 Teile Isophthalsäure wurden in einem Rührkessel vorgelegt und auf 120 °C unter Stickstoffeinperlung erwärmt. Nach der Stickstoffinertisierung wurden 0,013 Teile Titantetrabutanolat zugegeben und es wurde auf 185 °C aufgeheizt. Es wurde so lange die Temperatur bei 185 °C und Stickstoffeinleitung gehalten, bis die Isophthalsäure komplett gelöst war. Anschließend wurde Vakuum angelegt und bei 185 °C so lange verestert, bis die OH-Zahl im Bereich von 34 bis 38 mg KOH/g angelangt war. Dann wurde mit Stickstoff auf normalen Druck entspannt, auf 120 °C abgekühlt und abgefüllt. Die GPC-Analyse zeigte ein Molekulargewicht von ca. 3000 g/mol an.

### Herstellung eines Urethanacrylats auf Basis eines Polyesterdiols mit Molekulargewicht ca. 3000 g/mol enthaltend Polycaprolactoneinheiten

168 Teile des Polyesterdiols enthaltend Polycaprolactoneinheiten (ca. 3000 g/mol), 0,2 Teilen Hydrochinonmonomethylether, 0,25 Teile 2,6-di-tert.Butylkresol und 88 Teile 4-t-Butylcyclohexylacrylat sowie 0,03 Teile Dibutylzinn dilaurat wurden auf 60°C aufgeheizt. Dann gab man innerhalb von 15 Minuten 25 Teile Isophorondiisocyanat zu und ließ bei 80-85°C 7 Stunden reagieren, danach tropfte man innerhalb von 5 Minuten 13Teile Hydroxyethylacrylat zu und ließ weitere 4 Stunden bei der angegebenen Temperatur weiterreagieren. Der NCO Wert war danach auf 0 abgefallen.
Das abgekühlte Produkt hatte eine Viskosität bei Raumtemperatur von 123 Pas, gemessen mit einem Epprecht Kegel/Plattenviskosimeter (Cone D).

### Beispiel 2:

Man verfährt wie in Beispiel 1, jedoch wird anstatt des Polyesters auf Basis Caprolacton ein analog aufgebauter Polyester auf Basis Polytetrahydrofuran (Molekulargewicht ca. 650 g/mol) mit einem Molekulargewicht von 3000 g/mol eingesetzt.

### Herstellung von Lacken aus den Harzen

Die entsprechend der Beispiele hergestellten Harze wurden mit je 30 Gew% des Reaktiwerdünners t-Butylcyclohexylacrylat abgemischt und zu je 96 Teilen des so hergestellten Lackes wurden 4 Teile des Photoinitiators 2-Hydroxy-2-methyl-1-phenyl-propan-1-on (Darocure® 1173, Ciba Spezialitätenchemie) gegeben.
Die so erhaltenen Lackformulierungen wurden mit einem 120 µm Kastenrakel auf Glasplatten appliziert und mit je 1350 mJ/cm² auf einer IST-UV Bandanlage belichtet.

Die belichteten Filme wurden dann von der Glasplatte abgezogen und einer Zug-Dehnungsprüfung unterzogen. Es resultieren die in Tabelle 1 dargestellten Reißdehnungen, gemessen mit einer Zuggeschwindigkeit von 1 mm/min.

| Beispiel | Reißdehnung (%) |
|---|---|
| Vergleichsbeispiel 1 | 114 |
| Beispiel 1 | 153 |
| Beispiel 2 | 151 |

### Beispiel 3:

208 Teile des Polyesterdiols enthaltend Polycaprolactoneinheiten (ca. 3000 g/mol), 0,2 Teilen Hydrochinonmonomethylether, 0,25 Teile 2,6-di-tert.Butylkresol und 102 Teile 4-t-Butylcyclohexylacrylat sowie 0,03 Teile Borchi^{®}Kat 24 wurden auf 60°C aufgeheizt. Dann gab man innerhalb von 15 Minuten 30 Teile Isophorondiisocyanat zu und ließ bei 80-85°C 7 Stunden reagieren, danach tropfte man innerhalb von 5 Minuten 16Teile Hydroxyethylacrylat zu und ließ weitere 4 Stunden bei der angegebenen Temperatur weiterreagieren. Der NCO Wert war danach auf < 0,1 % abgefallen.
Das abgekühlte Produkt hatte eine Viskosität bei Raumtemperatur von 370 Pas, gemessen mit einem Epprecht Kegel/Plattenviskosimeter (Cone D).

### Beispiel 4:

208 Teile des Polyesterdiols enthaltend Polycaprolactoneinheiten (ca. 3000 g/mol), 0,2 Teilen Hydrochinonmonomethylether, 0,25 Teile 2,6-di-tert.Butylkresol und 102 Teile 4-t-Butylcyclohexylacrylat sowie 0,03 Teile Borchi^{®}Kat 24 wurden auf 60°C aufgeheizt. Dann gab man innerhalb von 15 Minuten 31,5 Teile Isophorondiisocyanat zu und ließ bei 80-85°C 7 Stunden reagieren, danach tropfte man innerhalb von 5 Minuten 17 Teile Hydroxyethylacrylat zu und ließ weitere 4 Stunden bei der angegebenen Temperatur weiterreagieren. Der NCO Wert war danach auf < 0,1 % abgefallen.
Das abgekühlte Produkt hatte eine Viskosität bei Raumtemperatur von 276 Pas, gemessen mit einem Epprecht Kegel/Plattenviskosimeter (Cone D).

### Beispiel 5:

208 Teile des Polyesterdiols enthaltend Polycaprolactoneinheiten (ca. 3000 g/mol), 0,2 Teilen Hydrochinonmonomethylether, 0,25 Teile 2,6-di-tert.Butylkresol und 102 Teile 4-t-Butylcyclohexylacrylat sowie 0,03 Teile Borchi^{®}Kat 24 wurden auf 60°C aufgeheizt. Dann gab man innerhalb von 15 Minuten 34,5 Teile Isophorondiisocyanat zu und ließ bei 80-85°C 7 Stunden reagieren, danach tropfte man innerhalb von 5 Minuten 18Teile Hydroxyethylacrylat zu und ließ weitere 4 Stunden bei der angegebenen Temperatur weiterreagieren. Der NCO Wert war danach auf < 0,1 % abgefallen.
Das abgekühlte Produkt hatte eine Viskosität bei Raumtemperatur von 285 Pas, gemessen mit einem Epprecht Kegel/Plattenviskosimeter (Cone D).

### Herstellung von Lacken aus den Harzen der Beispiele 3-5

Die entsprechend der Beispiele hergestellten Harze wurden mit je 4 Teilen des Photoinitiators 2-Hydroxy-2-methyl-1-phenyl-propan-1-on (Darocure® 1173, Ciba Spezialitätenchemie) versetzt und die so erhaltenen Lackformulierungen wurden mit einem 120 µm Kastenrakel auf Glasplatten appliziert und mit je 1350 mJ/cm² auf einer IST-UV Bandanlage belichtet.

Die belichteten Filme wurden dann von der Glasplatte abgezogen und einer Zug-Dehnungsprüfung unterzogen. Es resultieren die in Tabelle 1 dargestellten Reißdehnungen, gemessen mit einer Zuggeschwindigkeit von 1 mm/min.

| Beispiel | Überschuß IPDI | Reißdehnung (%) | Zähigkeit (J/cm³) |
|---|---|---|---|
| Beispiel 3 | 0% | 309 | 14,4 |
| Beispiel 4 | 5% | 332 | 17,4 |
| Beispiel 5 | 15% | 292 | 20,7 |

## Patentansprüche

1. Strahlungshärtbare Beschichtungsmassen, enthaltend
wenigstens ein Urethan(meth)acrylat (A) der Molmasse Mₙ von 1000 bis 5000 g/mol mit zwei ethylenisch ungesättigten Doppelbindungen pro Molekül, das als Aufbaukomponenten enthält
(a1) mindestens ein Diisocyanat,
(a2) mindestens ein Polyesterdiol, aufgebaut aus
(a21) optional einem Diol mit einem Molgewicht unter 250 g/mol,
(a22) mindestens einem oligomeren oder polymeren Diol, ausgewählt aus der Gruppe bestehend aus
(a221) Polytetrahydrofurandiol der Molmasse Mn bis zu 1000 g/mol und
(a222) mindestens einem Polycaprolactondiol der Molmasse Mn bis zu 600 g/mol
(a23) mindestens einer Dicarbonsäure, ausgewählt aus der Gruppe bestehend aus Verbindungen der Formel (la) 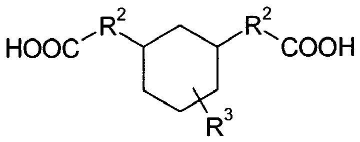 und/oder Verbindungen der Formel (Ib) 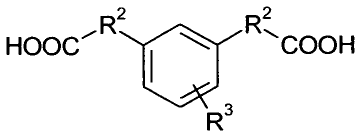
worin R² eine Einfachbindung oder einen 1 bis 3 Kohlenstoffatome aufweisenden, zweiwertigen Alkylenrest und
R³ Wasserstoff oder einen 1 bis 10-Kohlenstoffatome aufweisenden Alkylrest bedeuten,
(a3) mit genau einer gegenüber Isocyanat reaktiven Gruppe und genau einer ra dikalisch polymerisierbaren Gruppe und
wenigstens einen monoethylenisch ungesättigten Reaktivverdünner B, der we nigstens eine cycloaliphatische oder heterocyclische Gruppe aufweist.

2. Strahlungshärtbare Beschichtungsmassen gemäß Anspruch 1, **dadurch gekennzeichnet, daß** es sich bei der Komponente (a22) um mindestens ein mindestens ein Polycaprolactondiol (a222) handelt.

3. Strahlungshärtbare Beschichtungsmassen gemäß einem der vorstehenden Ansprüche, **dadurch gekennzeichnet, daß** das Polycaprolactondiol (a222) die Formel
HO-[-CH₂-CH₂-CH₂-CH₂-CH₂-(CO)-O]ₙ-R-OH
oder
HO-[-CH₂-CH₂-CH₂-CH₂-CH₂-(CO)-O]ₙ₁-R-[-O-(CO)-CH₂-CH₂-CH₂-CH₂-CH₂-]ₙ₂-OH
aufweist,
worin
n, n1 und n2 für positive ganze Zahlen stehen, für die gilt n = 1 bis 5 und (n1 + n2) = 1 bis 5 und
R einen zweibindigen aliphatischen oder cycloaliphatischen Rest mit mindestens einem Kohlenstoffatom, bevorzugt 2 bis 20, besonders bevorzugt 2 bis 10, ganz besonders bevorzugt 3 bis 6 Kohlenstoffatomen.

4. Strahlungshärtbare Beschichtungsmassen gemäß einem der vorstehenden Ansprüche, **dadurch gekennzeichnet, daß** die Komponente (a23) ausgewählt ist aus der Gruppe bestehend aus Isophthalsäure, 1,3-Cyclohexandicarbonsäure, 4-Methyl-1,3-cyclohexandicarbonsäure und 1,3-Phenylendiessigsäure.

5. Strahlungshärtbare Beschichtungsmassen gemäß einem der vorstehenden Ansprüche, **dadurch gekennzeichnet, daß** die Komponente (a3) ausgewählt ist aus der Gruppe bestehend aus 2-Hydroxyethyl(meth)acrylat, 2- Hydroxypropyl(meth)acrylat, 3-Hydroxy-propyl(meth)acrylat, 1,4-Butandiolmono(meth)acrylat, Neopentylglykolmono(meth)acrylat, 1,5-Pentandiolmono(meth)acrylat, 1,6-Hexandiolmono(meth)-acrylat und 4-Hydroxybutylvinylether.

6. Strahlungshärtbare Beschichtungsmassen gemäß einem der vorstehenden Ansprüche, **dadurch gekennzeichnet, daß** es sich bei dem Reaktivverdünner (B) um einen Ester von (Meth)acrylsäure mit Cycloalkanolen oder Bicycloalkanolen handelt, wobei das Cycloalkanol oder Bicycloalkanol von 3 bis 20 Kohlenstoffatome aufweist und gegebenenfalls mit C₁- bis C₄-Alkyl substituiert sein kann.

7. Strahlungshärtbare Beschichtungsmasse gemäß einem der Ansprüche 1 bis 5, **dadurch gekennzeichnet, daß** es sich bei dem Reaktiwerdünner (B) um einen Ester α,β-ethy-lenisch ungesättigter Carbonsäuren mit einem monofunktionellen Alkanol handelt, das wenigstens einen gesättigten 5- oder 6-gliedrigen Heterocyclus mit einem oder zwei Sauerstoffatomen im Ring als Strukturelement aufweist.

8. Strahlungshärtbare Beschichtungsmasse gemäß einem der Ansprüche 1 bis 5, **dadurch gekennzeichnet, daß** der Reaktivverdünner (B) ausgewählt ist aus der Gruppe bestehend aus dem (Meth)acrylsäureestern von Cyclopentanol, Cyclohexanol, Cyclo-octanol, Cyclododecanol, 4-Methyl cyclohexanol, 4-iso Propyl cyclohexanol, 4-tert. Butyl cyclohexanol, Dihydrodicyclopentadienylalkohol und Norbornylalkohol sowie Trimethylolpropanmonoformalacrylat, Glycerinmonoformalacrylat, 4-Te-trahydropyranylacrylat, 2-Tetrahydropyranylmethylacrylat und Tetrahydrofurfuryl-acrylat.

9. Strahlungshärtbare Beschichtungsmasse gemäß einem der vorstehenden Ansprüche, **dadurch gekennzeichnet, daß** sie weiterhin mindestens eine Verbindung (C) enthält, bei der es sich um ein Urethan(meth)acrylat mit einem gewichtsmittleren Molgewicht Mw unter 1000 g/mol handelt.

10. Strahlungshärtbare Beschichtungsmasse gemäß Anspruch 9, **dadurch gekennzeichnet, daß** es sich bei der Verbindung (C) um das Reaktionsprodukt eines (cyclo)aliphatischen Diisocyanates mit mindestens einer Verbindung mit genau einer gegenüber Isocyanat reaktiven Gruppe und genau einer radikalisch polymerisierbaren Gruppe handelt.

11. Verwendung der Beschichtungsmassen gemäß einem der Ansprüche 1 bis 10 zum Beschichten von Holz, Papier, Textil, Leder, Vlies, Kunststoffoberflächen, Glas, Keramik, mineralischen Baustoffen, Metallen oder beschichteten Metallen.

12. Verwendung der Beschichtungsmassen gemäß einem der Ansprüche 1 bis 10 als Formmassen in Folien oder Schläuchen, die optional mit Fasern verstärkt sein können.

## Claims

1. A radiation-curable coating composition comprising
at least one urethane (meth)acrylate (A) having a molar mass Mₙ of 1000 to 5000 g/mol and two ethylenically unsaturated double bonds per molecule, comprising as synthesis component
(a1) at least one diisocyanate,
(a2) at least one polyesterdiol synthesized from
(a21) optionally a diol having a molar weight below 250 g/mol,
(a22) at least one oligomeric or polymeric diol selected from the group consisting of
(a221) polytetrahydrofurandiol with a molar mass Mn of up to 1000 g/mol and
(a222) at least one polycaprolactonediol with a molar mass Mn of up to 600 g/mol,
(a23) at least one dicarboxylic acid selected from the group consisting of compounds of the formula (Ia) 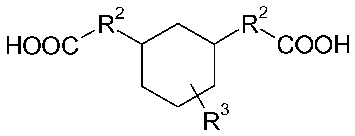 and/or compounds of the formula (Ib) 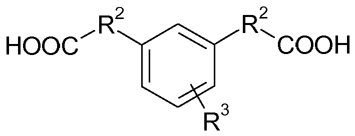 in which R² is a single bond or a divalent alkylene radical containing 1 to 3 carbon atoms, and
R³ is hydrogen or an alkyl radical containing 1 to 10 carbon atoms,
(a3) having precisely one isocyanate-reactive group and precisely one free-radically polymerizable group and
at least one monoethylenically unsaturated reactive diluent B which contains at least one cycloaliphatic or heterocyclic group.

2. The radiation-curable coating composition according to claim 1, wherein component (a22) is at least one polycaprolactonediol (a222).

3. The radiation-curable coating composition according to either of the preceding claims, wherein the polycaprolactonediol (a222) has the formula
HO-[-CH₂-CH₂-CH₂-CH₂-CH₂-(CO)-O]ₙ-R-OH
or
HO-[-CH₂-CH₂-CH₂-CH₂-CH₂-(CO)-O]ₙ₁-R-[-O-(CO)-CH₂-CH₂-CH₂-CH₂-CH₂-]ₙ₂ -OH
in which
n, n1, and n2 are positive integers, for which n = 1 to 5 and (n1 + n2) = 1 to 5, and
R is a divalent aliphatic or cycloaliphatic radical having at least one carbon atom, preferably 2 to 20, more preferably 2 to 10, very preferably 3 to 6 carbon atoms.

4. The radiation-curable coating composition according to any of the preceding claims, wherein component (a23) is selected from the group consisting of isophthalic acid, 1,3-cyclohexanedicarboxylic acid, 4-methyl-1,3-cyclohexanedicarboxylic acid, and 1,3-phenylenediacetic acid.

5. The radiation-curable coating composition according to any of the preceding claims, wherein component (a3) is selected from the group consisting of 2-hydroxyethyl (meth)acrylate, 2-hydroxypropyl (meth)acrylate, 3-hydroxypropyl (meth)acrylate, 1,4-butanediol mono(meth)acrylate, neopentyl glycol mono(meth)acrylate, 1,5-pentanediol mono(meth)acrylate, 1,6-hexanediol mono(meth)acrylate, and 4-hydroxybutyl vinyl ether.

6. The radiation-curable coating composition according to any of the preceding claims, wherein the reactive diluent (B) is an ester of (meth)acrylic acid with cycloalkanols or bicycloalkanols, the cycloalkanol or bicycloalkanol having from 3 to 20 carbon atoms and being optionally substitutable by C₁ to C₄ alkyl.

7. The radiation-curable coating composition according to any of claims 1 to 5, wherein the reactive diluent (B) is an ester of α,β-ethylenically unsaturated carboxylic acids with a monofunctional alkanol which has as a structural element at least one saturated 5- or 6-membered heterocycle having one or two oxygen atoms in the ring.

8. The radiation-curable coating composition according to any of claims 1 to 5, wherein the reactive diluent (B) is selected from the group consisting of the (meth)acrylic esters of cyclopentanol, cyclohexanol, cyclooctanol, cyclododecanol, 4-methylcyclohexanol, 4-isopropylcyclohexanol, 4-tert-butylcyclohexanol, dihydrodicyclopentadienyl alcohol, and norbornyl alcohol, and also trimethylolpropane monoformal acrylate, glycerol monoformal acrylate, 4-tetrahydropyranyl acrylate, 2-tetrahydropyranylmethyl acrylate, and tetrahydrofurfuryl acrylate.

9. The radiation-curable coating composition according to any of the preceding claims, further comprising at least one compound (C) which is a urethane (meth)acrylate having a weight-average molar weight Mw of below 1000 g/mol.

10. The radiation-curable coating composition according to claim 9, wherein the compound (C) is the reaction product of a (cyclo)aliphatic diisocyanate with at least one compound having exactly one isocyanate-reactive group and exactly one free-radically polymerizable group.

11. The use of the coating composition according to any of claims 1 to 10 for coating wood, paper, textile, leather, nonwoven, plastics surfaces, glass, ceramic, mineral building materials, or coated or uncoated metals.

12. The use of the coating composition according to any of claims 1 to 10 as a molding compound in films or tubes which may optionally be reinforced with fibers.

## Revendications

1. Matières de revêtement durcissables par irradiation, contenant
au moins un uréthane(méth)acrylate (A) de masse moléculaire Mn de 1 000 à 5 000 g/mole, comportant deux doubles liaisons à insaturation éthylénique par molécule, qui contient en tant que composants structuraux
(a1) au moins un diisocyanate,
(a2) au moins un polyesterdiol, constitué de
(a21) en option un diol ayant une masse moléculaire inférieure à 250 g/mole,
(a22) au moins un diol oligomère ou polymère, choisi dans le groupe constitué par
(a221) un polytétrahydrofuranediol de masse moléculaire Mn allant jusqu'à 1 000 g/mole et
(a222) au moins un polycaprolactonediol de masse moléculaire Mn allant jusqu'à 600 g/mole
(a23) au moins un acide dicarboxylique, choisi dans le groupe constitué par des composés de formule (Ia) 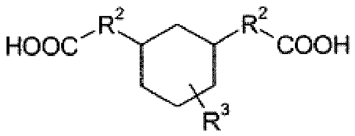 et/ou des composés de formule (Ib) 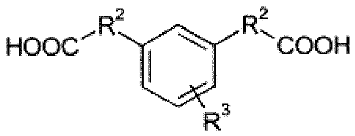 formules dans lesquelles R² représente une liaison simple ou un radical alkylène divalent comportant de 1 à 3 atomes de carbone et
R³ représente un atome d'hydrogène ou un radical alkyle comportant de 1 à 10 atomes de carbone,
(a3) avec exactement un groupe réactif vis-à-vis d'isocyanate et exactement un groupe polymérisable par voie radicalaire et
au moins un diluant réactif B à insaturation monoéthylénique, qui comporte au moins un groupe cycloaliphatique ou hétérocyclique.

2. Matières de revêtement durcissables par irradiation selon la revendication 1, **caractérisées en ce que** le composant (a22) consiste en au moins un polycaprolactonediol (a222).

3. Matières de revêtement durcissables par irradiation selon l'une quelconque des revendications précédentes, **caractérisées en ce que** le polycaprolactonediol (a222) présente la formule
HO-[-CH₂-CH₂-CH₂-CH₂-CH₂-(CO)-O]ₙ-R-OH
ou
HO-[-CH₂-CH₂-CH₂-CH₂-CH₂-(CO)-O]ₙ₁-R-[-O-(CO)-CH₂-CH₂-CH₂-CH₂-CH₂-]ₙ₂-OH,
formules dans lesquelles
n, n1 et n2 représentent des nombres entiers positifs, pour lesquels n = 1 à 5 et (n1 + n2) = 1 à 5 et
R représente un radical aliphatique ou cycloaliphatique à deux liaisons, ayant au moins un atome de carbone, de préférence 2 à 20, de façon particulièrement préférée 2 à 10, de façon tout particulièrement préférée 3 à 6 atomes de carbone.

4. Matières de revêtement durcissables par irradiation selon l'une quelconque des revendications précédentes, **caractérisées en ce que** le composant (a23) est choisi dans le groupe constitué par l'acide isophtalique, l'acide 1,3-cyclohexanedicarboxylique, l'acide 4-méthyl-1,3-cyclohexanedicarboxylique et l'acide 1,3-phénylènediacétique.

5. Matières de revêtement durcissables par irradiation selon l'une quelconque des revendications précédentes, **caractérisées en ce que** le composant (a3) est choisi dans le groupe constitué par le (méth)acrylate de 2-hydroxyéthyle, le (méth)acrylate de 2-hydroxypropyle, le (méth)acrylate de 3-hydroxypropyle, le mono(méth)acrylate de 1,4-butanediol, le mono(méth)acrylate de néopentylglycol, le mono(méth)-acrylate de 1,5-pentanediol, le mono(méth)acrylate de 1,6-hexanediol et l'oxyde de vinyle et de 4-hydroxybutyle.

6. Matières de revêtement durcissables par irradiation selon l'une quelconque des revendications précédentes, **caractérisées en ce que** le diluant réactif (B) consiste en un ester d'acide (méth)acrylique avec des cycloalcanols ou bicycloalcanols, le cycloalcanol ou bicycloalcanol ayant de 3 à 20 atomes de carbone et pouvant éventuellement être substitué par alkyle en C₁-C₄.

7. Matière de revêtement durcissable par irradiation selon l'une quelconque des revendications 1 à 5, **caractérisée en ce que** le diluant réactif (B) consiste en un ester d'acides carboxyliques à insaturation α,β-éthylénique avec un alcanol monofonctionnel qui comporte au moins un hétérocycle saturé à 5 ou 6 chaînons comportant un ou deux atomes d'oxygène en tant qu'élément structural dans le cycle.

8. Matière de revêtement durcissable par irradiation selon l'une quelconque des revendications 1 à 5, **caractérisée en ce que** le diluant réactif (B) est choisi dans le groupe constitué par les esters d'acide (méth)acrylique avec le cyclopentanol, le cyclohexanol, le cyclo-octanol, le cyclododécanol, la 4-méthylcyclohexanol, le 4-isopropyl-cyclohexanol, le 4-tert-butyl-cyclohexanol, l'alcool dihydrodicyclopentadiénylique et l'alcool norbonylique ainsi que le monoformalacrylate de triméthylolpropane, le monoformalacrylate de glycérol, l'acrylate de 4-tétrahydropyranyle, l'acrylate de 2-tétrahydropyranylméthyle et l'acrylate de tétrahydrofurfuryle.

9. Matière de revêtement durcissable par irradiation selon l'une quelconque des revendications précédentes, **caractérisée en ce qu'**elle contient en outre au moins un composé (C) qui consiste en un uréthane(méth)acrylate ayant une masse moléculaire moyenne en poids Mw inférieure à 1 000 g/mole.

10. Matière de revêtement durcissable par irradiation selon la revendication 9, **caractérisée en ce que** le composé (C) consiste en le produit de réaction d'un diisocyanate (cyclo)aliphatique avec au moins un composé comportant exactement un groupe réactif vis-à-vis d'isocyanate et exactement un groupe polymérisable par voie radicalaire.

11. Utilisation des matières de revêtement selon l'une quelconque des revendications 1 à 10, pour le revêtement de bois, papier, textile, cuir, non-tissé, surfaces de matière plastique, verre, céramique, matériaux de construction minéraux, métaux ou métaux revêtus.

12. Utilisation des matières de revêtement selon l'une quelconque des revendications 1 à 10, en tant que matières à mouler dans des films ou des tuyaux souples, qui sont en option renforcés avec des fibres.
